# EUROPÄISCHE PATENTSCHRIFT

(11) **EP 0 501 998 B1**
(45) Veröffentlichungstag und Bekanntmachung des Hinweises auf die Patenterteilung: **23.02.1994**
(21) Anmeldenummer: 90916742.1
(22) Anmeldetag: 16.11.1990
(51) Int. Cl.: B01D 35/14, B01D 17/12

(54) **VORRICHTUNG ZUR FILTRATION VON VERUNREINIGTEN FLÜSSIGKEITEN, INSBESONDERE VON WASSER**
DEVICE FOR FILTERING CONTAMINATED LIQUIDS, IN PARTICULAR WATER
DISPOSITIF POUR LA FILTRATION DE LIQUIDES POLLUES, EN PARTICULIER D'EAU

(30) Priorität: 30.11.1989 DE 3939502
(43) Veröffentlichungstag der Anmeldung: 09.09.1992
(73) Patentinhaber: FLUID TEAM AUTOMATIONSTECHNIK GmbH, D-78462 Konstanz (DE)
(72) Erfinder: LÖHRL, Volkhard, CH-8598 Bottighofen (CH); GEHRINGER, Andreas, D-7750 Konstanz (DE)
(74) Vertreter: Rotermund, Hanns-Jörg, Dipl.-Phys.
(86) Internationale Anmeldenummer: EP9001957
(87) Internationale Veröffentlichungsnummer: WO9108036

(56) Entgegenhaltungen:
- EP-A- 0 087 171
- DE-U- 8 632 189
- GB-A- 717 479
- GB-A- 1 601 671
- Derwent's abstract Nr. 543 78 E/26, SU 860 805, publ. Woche 8226

## Beschreibung

Die Erfindung betrifft eine Vorrichtung zur Filtration von verunreinigten Flüssigkeiten, insbesondere von Wasser, welches durch Öl bzw. ölhaltige Stoffe verschmutzt ist, mit einer von der Flüssigkeit durchsetzten Filterzone, in der die Verunreinigungen, z.B. durch Adsorption, zurückgehalten werden, sowie mit einer ausgangsseitig der Filterzone angeordneten Überwachungseinrichtung, welche bei unzureichender Wirkung der Filterzone eine die verschmutzte Flüssigkeit zur Eingangsseite der Filterzone fördernde Pumpe abschaltet und/oder eine an den Ausgang der Filterzone anschließende Abfuhrleitung absperrt.

Eine entsprechende Vorrichtung wird in der GB-A 16 01 671 beschrieben. Bei dieser bekannten Vorrichtung ist die Pumpe ausgangsseitig der Filterzone angeordnet, und die Überwachungseinrichtung reagiert auf den saugseitigen Druck der Pumpe, d.h. auf den Druck der Flüssigkeit zwischen Ausgang der Filterzone und Pumpeneingang. Da der Drosselwiderstand der Filterzone mit zunehmender Verschmutzung ansteigt, nimmt der saugseitige Druck der Pumpe mit zunehmender Verschmutzung ab. Bei Unterschreitung eines entsprechenden Druckschwellwertes wird dann mittels eines Absperrventiles die Verbindung zwischen dem Ausgang der Filterzone und dem Pumpeneingang abgesperrt.

Aus der GB-A 717 479 ist es bekannt, einer verschmutzten Flüssigkeit Schmutzbindemittel zuzuführen, die dann nachfolgend in einer von der Flüssigkeit durchsetzten Filterzone zusammen mit dem von ihnen gebundenen Schmutz zurückgehalten werden. Ausgangsseitig der Filterzone ist eine Überwachungseinrichtung für die Restverschmutzung der gereinigten Flüssigkeit angeordnet. Diese Überwachungseinrichtung reagiert auf die je nach dem Maß der Restverschmutzung unterschiedliche Streuung eines die Flüssigkeit durchsetzenden Lichtstrahles und steuert die Zuführung der Schmutzbindemittel, derart, daß eine übermäßige Restverschmutzung vermieden wird.

Aufgabe der Erfindung ist es nun, einen besonders wirtschaftlichen Betrieb von Filtrationsvorrichtungen und insbesondere eine optimale Ausnutzung der Kapazität der Filterzone zu ermöglichen.

Diese Aufgabe wird erfindungsgemäß dadurch gelöst, daß ein von der Überwachungseinrichtung gesteuertes Umlaufventil angeordnet ist, welches zwischen einer Durchlaßstellung, in der der Ausgang der Filterzone mit der Ablaßleitung verbunden ist, und einer Umlaufstellung umschaltbar ist, in der der Ausgang der Filterzone an die Saugseite einer Pumpe angeschlossen ist, deren Druckseite mit dem Eingang der Filterzone verbunden ist, und daß das Umlaufventil bei Betriebszuständen, bei denen die Überwachungseinrichtung eine Überschreitung eines Schwellwertes für die Restverschmutzung der aus der Filterzone austretenden Flüssigkeit registriert, von der Überwachungseinrichtung auf Umlaufbetrieb und, wenn der Umlaufbetrieb zu einer Absenkung des Meßwertes für die Restverschmutzung unter den Schwellwert führt, erneut in die Durchlaßstellung geschaltet wird.

Durch die Möglichkeit, gegebenenfalls auf Umlaufbetrieb umzuschalten, bei dem die zu reinigende Flüssigkeit von der Ausgangsseite der Filterzone erneut zur Einlaßseite derselben zurückgeführt wird und damit die Filterzone erneut durchsetzen muß, wird der Tatsache Rechnung getragen, daß je nach Art der Überwachungseinrichtung unterschiedliche Betriebszustände auftreten können, bei denen die Überwachungseinrichtung eine Überschreitung des Schwellwertes der Restverschmutzung registriert, obwohl tatsächlich keine unzulässige Restverschmutzung vorliegt. Hier nutzt nun die Erfindung die Erkenntnis, daß diese "scheinbaren Restverschmutzungen" im Gegensatz zu "echten Restverschmutzungen" nur jeweils für begrenzte Zeitspannen auftreten. Dementsprechend können die für die Überwachungseinrichtung nicht unmittelbar unterscheidbaren "echten Restverschmutzungen" und scheinbaren Restverschmutzungen" dadurch unterschieden werden, daß bei einer Überschreitung des registrierten Wertes der Restverschmutzung zunächst auf Umlaufbetrieb umgeschaltet und überprüft wird, ob der Grad der registrierten Restverschmutzung während des Umlaufbetriebes in relativ kurzer Zeit unter den Schwellwert absinkt.

Zur Überwachung der Restverschmutzung können beispielsweise gemäß einer zweckmäßigen Ausgestaltung der Erfindung ein Lichtemitter, dessen Lichtstrahl ausgangsseitig der Filterzone einen Bereich der Flüssigkeit durchsetzt, sowie damit nach Art von Lichtschranken zusammenwirkende Lichtsensoren angeordnet sein, deren Ausgangssignale von der auf die Sensoren einfallenden Lichtintensitäten und damit von der in der Flüssigkeit auftretenden Lichtstreuung abhängig sind. Bei dieser Anordnung ändern sich also die Ausgangssignale bzw. das Verhältnis der Ausgangssignalpegel der Lichtsensoren in Abhängigkeit von der Anzahl der lichtstreuenden Partikel in der Flüssigkeit ausgangsseitig der Filterzone.

Wenn also ausgangsseitig der Filterzone plötzlich Schmutzpartikel, beispielsweise feine Öltröpfchen, auftreten, wird die Lichtstreuung in der Flüssigkeit erhöht, mit der Folge, daß sich die Ausgangssignale der Lichtsensoren entsprechend ändern. Auf diese Weise kann gegebenenfalls eine Anzeige geschaffen werden, die das Verhältnis zwischen der Zahl der in der Flüssigkeit befindlichen lichtstreuenden Partikel und der Flüssigkeitsmenge bzw. -masse wiedergibt.

Eine solche die Lichtstreuung nutzende Überwachungseinrichtung kann jedoch nicht sicher zwischen das Licht streuenden Schmutzpartikeln und das Licht ebenfalls streuenden kleinen Luftbläschen unterscheiden, die von Zeit zu Zeit auftreten können, weil in der Regel die zu reinigende Flüssigkeit der Filterzone nicht völlig frei von Luftblasen zugeführt werden kann.

Wenn hier nun die Überwachungseinrichtung bei Überschreitung eines Schwellwertes der zulässigen Partikelzahl zunächst auf Umlaufbetrieb umschaltet, so lassen sich Luftbläschen von Öltröpfchen leicht unterscheiden. Die Zahl der Luftbläschen wird nämlich beim Umlaufbetrieb in kürzester Zeit stark herabgesetzt, so daß die dann gemessene Partikelzahl die Zahl der Öltröpfchen bzw. Schmutzpartikel wiedergibt. Wenn also nach kurzem Umlaufbetrieb die registrierte Partikelzahl deutlich unter den Schwellwert absinkt, ist sichergestellt, daß die Rückhaltekapazität der Filterzone noch nicht aufgebraucht wurde, d.h. es kann ohne weiteres auf normalen Filterbetrieb umgeschaltet werden, bis wiederum eine Überschreitung des Schwellwertes der Partikelzahl registriert wird usw.

Bei einer weiteren zweckmäßigen Überwachungseinrichtung für die Restverschmutzung wird der Effekt ausgenutzt, daß sich der elektrische Widerstand von Strompfaden verschmutzungsabhängig ändern kann, welche die Flüssigkeit ausgangsseitig der Filterzone durchsetzen bzw. durch oder über Elemente führen, die innerhalb der Flüssigkeit ausgangsseitig der Filterzone angeordnet und von der Flüssigkeit benetzt oder durchdrungen werden.

Bei einer besonders vorteilhaften Ausführungsform einer nach diesem Prinzip arbeitenden Überwachungseinrichtung sind zwei an entgegengesetzte Pole einer Spannungsquelle anschließbare Elektroden an einer Folien-, Gewebe- oder Vliesbahn angeordnet, die von der Flüssigkeit umspült bzw. durchsetzt wird. Wenn die Folien-, Gewebe- oder Vliesbahn beispielsweise von sauberem Wasser umspült bzw. durchsetzt wird, besitzt der von Elektrode zu Elektrode führende Strompfad einen vergleichsweise geringen elektrischen Widerstand; dagegen nimmt der elektrische Widerstand bei Verschmutzungen der Elektroden bzw. der Folien-, Gewebe- oder Vliesbahn durch ölige Verschmutzungen sehr schnell zu, so daß ein Anstieg des elektrischen Widerstandes ein sehr empfindliches Signal für eine unerwünschte Restverschmutzung darstellt.

Auch hier können jedoch gegebenenfalls "scheinbare Verschmutzungen" in Form von Gas- bzw. Luftbläschen auftreten, welche sich an bzw. in der Folien-, Gewebe- oder Vliesbahn oder auch an den Elektroden festsetzen können, insbesondere, wenn die Filteranlage vorübergehend stillgesetzt wurde, weil keine zu reinigende Flüssigkeit angefallen ist. Durch vorübergehenden Umlaufbetrieb lassen sich die Luft- bzw. Gasbläschen in kürzester Zeit entfernen, so daß der elektrische Widerstand des Strompfades nach dem Umlaufbetrieb ein Maß für die tatsächliche Verschmutzung im Bereich des Strompfades bildet.

Im übrigen wird hinsichtlich bevorzugter Merkmale der Erfindung auf die Ansprüche sowie die nachfolgende Beschreibung vorteilhafter Ausführungsformen der Erfindung anhand der Zeichnung verwiesen.

Dabei zeigt
- Fig. 1: eine schematisierte Gesamtdarstellung der erfindungsgemäßen Vorrichtung, wobei die Filterzone in Form eines Längsschnittes dargestellt ist,
- Fig. 2: eine Draufsicht auf eine Einzelheit der Filterzone entsprechend der Schnittlinie II-II in Fig. 1 und
- Fig. 3: eine der Fig. 1 entsprechende Darstellung einer abgewandelten Ausführungsform.

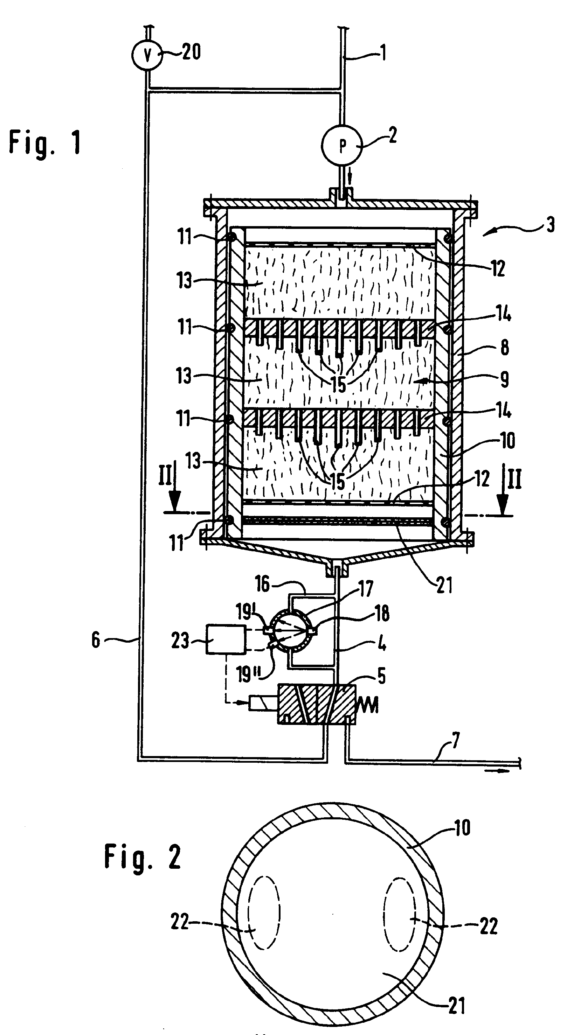

Bei der in Fig. 1 dargestellten Anlage wird mit Öl verschmutztes Wasser über eine Leitung 1 der Saugseite einer Membranpumpe 2 zugeführt, welche druckseitig an den Eingang einer Filtervorrichtung 3 angeschlossen ist. An den Ausgang der Filtervorrichtung 3 schließt sich eine Leitung 4 an, welche über ein Umlaufventil 5 entweder - wie in Fig. 1 dargestellt - mit einer Umlaufleitung 6 oder mit einer Ablaßleitung 7 verbunden werden kann. Die Umlaufleitung 6 ist saugseitig der Membranpumpe 2 an die Eingangsleitung 1 angeschlossen, so daß das am Ausgang der Filtervorrichtung 3 austretende Wasser in Umlaufstellung des Umlaufventiles 5 bei laufender Membranpumpe 2 erneut durch die Filtervorrichtung 3 geleitet wird.

Das Umlaufventil 5 kann elektrisch durch einen Stellmagneten betätigt werden, welcher bei Erregung das Umlaufventil 5 aus der dargestellten Umlaufstellung in seine Durchlaßstellung umschaltet, bei der die Leitung 4 mit der Ablaßleitung 7 verbunden ist, über die das aus der Filtervorrichtung 3 herauskommende Wasser der Kanalisation oder einer erneuten Verwendung zugeführt werden kann. Sobald der Elektromagnet des Umlaufventiles 5 stromlos wird, wird das Umlaufventil 5 durch eine Rückstellfeder in die dargestellte Umlaufstellung zurückgestellt.

Die Steuerung des Umlaufventiles 5 erfolgt in weiter unten dargestellter Weise in Abhängigkeit von der Restverschmutzung des aus der Filtervorrichtung 3 in die Leitung 4 einströmenden Wassers.

Die Filtervorrichtung 3 besitzt ein aufrechtstehendes zylindrisches Gehäuse 8 mit oben angeordnetem Eingang und unten befindlichem Ausgang. In dieses Gehäuse 8 kann nach Entfernung des oberen Stirndeckels ein kartuschenartig ausgebildeter Filtersatz 9 von oben her eingesetzt werden. Dieser Filtersatz 9 besitzt eine rohrförmige Ummantelung 10, deren Außendurchmesser dem Innendurchmesser des Gehäuses 8 angepaßt ist. Durch auf den Außenumfang der Ummantelung 10 in Nuten od.dgl. angeordnete Dichtringe 11 wird gewährleistet, daß durch den Ringspalt zwischen der Außenseite der Ummantelung 10 und der Innenseite des Gehäuses 3 kein Wasser vom Eingang zum Ausgang der Filtervorrichtung 3 durchtreten kann.

Der Filtersatz 9 wird in der Ummantelung 10 durch an deren Stirnenden angeordnete netzartige Gitter 12, die mit der rohrförmigen Ummantelung 10 fest verbunden sind, festgehalten.

Im dargestellten Beispiel besteht der Filtersatz aus drei Filterschichten 13, welche aus öladsorbierendem Filtermaterial bestehen. Dabei bildet das Filtermaterial vorzugsweise mehr oder weniger lange,aus Polypropylen bestehende Bänder, Kordeln, Schnipsel od.dgl., die nach Art eines Kissens eng zusammengepackt sind. Durch diese band- bzw. kordelartige Struktur des öladsorbierenden Materials der Filterschichten 13 kann einerseits eine wünschenswerte Durchlässigkeit für das die Filtervorrichtung 3 durchsetzende Wasser gewährleistet werden; andererseits werden labyrinthartige Strömungswege geschaffen, so daß die im Wasser mitgeführten Ölpartikel längs einer langen Wegstrecke in den Filterschichten 13 adsorbiert werden können. Dadurch kann ein hoher Reinheitsgrad des die Filtervorrichtung 3 verlassenden Wassers erreicht werden.

Zwischen den Filterschichten 13 sind zur Achse der Ummantelung 10 radiale Platten 14 angeordnet, welche in axialer Richtung durch eine Vielzahl enger Bohrungen bzw. Röhrchen 15 für den Durchtritt des Wassers von einer Filterschicht 13 zur nächsten durchsetzt sind. Der Querschnitt der Bohrungen bzw. Röhrchen 15 ist so eng bemessen, daß dieselben als Drosseln wirken.

Dadurch bildet sich bei Betrieb der Pumpe 2 jeweils oberhalb der Platten 15 ein gewisser Rückstau in dem die Filtervorrichtung 3 durchsetzenden Wasser. Dies hat zur Folge, daß sich das die Filtervorrichtung 3 durchsetzende Wasser oberhalb der Platten 14 jeweils über den gesamten Querschnitt der angrenzenden Filterschichten 13 verteilt und die adsorbierende Wirkung der Filterschichten 13 auch nahe der Ummantelung 10 wirksam und vollständig ausgenutzt werden kann.

Des weiteren bewirken die Bohrungen bzw. Röhrchen, daß das durchtretende Wasser in gewünschter Weise über den gesamten Querschnitt der jeweils unterhalb der Platten 14 angeordneten Filterschichten 13 verteilt wird. Gegebenenfalls kann der Drosselwiderstand der bezüglich der Vertikalachse der Ummantelung 10 radial weiter außen liegenden Bohrungen bzw. Röhrchen 15 geringer bemessen sein als der Drosselwiderstand der weiter innen liegenden Bohrungen bzw. Röhrchen 15. Dies läßt sich gegebenenfalls auch bei identischem Querschnitt aller Bohrungen bzw. Röhrchen 15 erreichen, beispielsweise dadurch, daß die Bohrungen bzw. Röhrchen 15 mit dem geringeren Drosselwiderstand eine entsprechend geringere Länge besitzen. Im übrigen können die Röhrchen 15 in die jeweils untere Filterschicht 13 hineinragen.

Alle diese Maßnahmen tragen dazu bei, daß die Filterschichten 13 gleichmäßig ausgenutzt werden, d.h. daß am Ende der Standzeit des Filtersatzes 9 auch die radial außenliegenden Bereiche der Filterschichten 13 annähernd die gleiche Ölmenge adsorbiert haben wie die weiter innen liegenden Bereiche.

Die Platten 14 können ebenso wie die Ummantelung 10 aus einem Kunststoffmaterial bestehen, wobei eine zerlegbare Verbindung zwischen der Ummantelung 10 und den Platten 14 bevorzugt ist, um am Ende der Standzeit des Filtersatzes 9 eine Regenerierung bzw. einen Austausch der Filterschichten 13 zu erleichtern.

Gemäß einer bevorzugten Ausführungsform der Erfindung ist vorgesehen, den Grad der Restverschmutzung des Wassers ausgangsseitig des Filtersatzes 9 ständig zu überwachen.

Dazu kann gemäß Fig. 1 an der Ausgangsleitung 4 eine Bypaßleitung 16 angeordnet sein, die durch eine Kammer 17 mit einem Lichtemitter 18 sowie einem damit nach Art einer Lichtschranke zusammenwirkenden ersten Lichtsensor 19' führt. Der Lichtemitter 18 erzeugt einen das Wasser in der Kammer 17 durchsetzenden gebündelten Infrarot-Lichtstrahl, welcher auf den Lichtsensor 19' ausgerichtet ist. Der Lichtstrahl wird in dem Wasser innerhalb der Kammer 17 unterschiedlich stark gestreut, wenn sich im Wasser lichtstreuende Partikel, beispielsweise feine Öltröpfchen, befinden. Je nach Grad der lichtstreuenden Partikel im Wasser, fällt dann auf den Lichtsensor 19' eine unterschiedliche Lichtintensität, gleichzeitig wird ein seitwärts der Achse des Lichtstrahles angeordneter weiterer Lichtsensor 19'' unterschiedlich stark beleuchtet. Dementsprechend stellt sich zwischen den von der empfangenen Lichtintensität abhängigen Pegeln der Ausgangssignale der Lichtsensoren 19' und 19'' ein unterschiedliches Verhältnis ein, welches von der Zahl der lichtstreuenden Partikel im Wasser abhängt. Dieses Verhältnis wird von einer Überwachungseinheit 23 ausgewertet, welche bei Überschreitung eines Schwellwertes des genannten Pegelverhältnisses bzw. einer vorgegebenen Partikelzahl das Umlaufventil 5 in die in Fig. 1 dargestellte Umlaufstellung schaltet. Dazu braucht lediglich der Elektromagnet des Umlaufventiles 5 stromlos geschaltet zu werden.

Zunächst bleibt nach Umschaltung des Umschaltventiles 5 in die Umlaufstellung die Pumpe 2 weiterhin in Betrieb, d.h. die Filtervorrichtung 3 wird im Umlauf betrieben, wobei das Wasser vom Ausgang der Filtervorrichtung 3 erneut zum Eingang derselben geleitet wird und dementsprechend den Filtersatz 9 erneut durchsetzt.

Durch den Umlaufbetrieb kann der Tatsache Rechnung getragen werden, daß im Wasser ausgangsseitig des Filtersatzes 9 eine relativ große Zahl von lichtstreuenden Partikeln auftreten kann, ohne daß eine echte Verschmutzung vorliegt. Beispielsweise können kleine Luftbläschen in großer Zahl auftreten, da es praktisch unvermeidbar ist, daß in dem über die Leitung 1 zugeführten verschmutzten Wasser größere Luftmengen mitgeführt werden. Durch den Umlaufbetrieb kann die Zahl der kleinen, das Licht streuenden Luftbläschen schnell abgebaut werden, so daß die durch die Luftbläschen verursachte "scheinbare Verschmutzung" des Wassers ausgangsseitig des Filtersatzes 9 beseitigt wird. (Zur Abführung größerer Luftmengen kann an der Umlaufleitung 6 ein Entlüftungsventil 20 angeordnet sein).

Wenn also durch den Umlaufbetrieb ein schnelles Absinken der Zahl der lichtstreuenden Partikel unter einen Schwellwert erreichbar ist, so ist dies gleichbedeutend damit, daß keine echten Verschmutzungen vorliegen und der Filtersatz 9 noch hinreichend wirksam arbeitet.

Dementsprechend kann nunmehr das Umlaufventil 5 wiederum in seine Durchlaßstellung umgeschaltet werden, indem beispielsweise der Elektromagnet dieses Ventiles bestromt wird.

Bei erneuter Überschreitung des Schwellwertes der Anzahl der lichtstreuenden Partikel wird dann wiederum zunächst auf Umlaufbetrieb umgeschaltet. Sollte dann dabei die Partikelzahl nicht hinreichend absinken, wird auch die Pumpe 2 abgeschaltet. Dies kann gegebenenfalls durch ein besonderes Signal angezeigt werden.

Nunmehr muß die Anlage überprüft werden, wobei in der Regel lediglich der Filtersatz 9 ausgetauscht werden muß.

Die Restverschmutzung des Wassers ausgangsseitig des Filtersatzes 9 kann auch in anderer Weise überwacht werden.

Besonders vorteilhaft ist dabei die Möglichkeit, den elektrischen Widerstand eines Strompfades zu bestimmen, welcher das Wasser durchsetzt bzw. über vom Wasser beaufschlagte Elemente bzw. Oberflächen führt.

In konstruktiv besonders vorteilhafter Ausführung kann am unteren Ende der Ummantelung 10 des Filtersatzes 9 eine Vlies-Doppellage 21 angeordnet sein, die vom Wasser durchsetzt wird und aus prinzipiell dem gleichen Fasermaterial wie die Filterschichten 13 besteht. Zwischen den Vlies-Lagen sind - vgl. auch Fig. 2 - voneinander beabstandete Elektroden 22 angeordnet, welche mit den Vlies-Lagen 21 innig verbunden bzw. in dieselben eingebettet sind. Die Vlies-Lagen 21 bilden also einen Träger für die Elektroden 22.

Werden die Elektroden 22 mit entgegengesetzten Polen einer Spannungsquelle verbunden, so bildet sich zwischen den Elektroden 22 ein durch das Wasser bzw. durch die Vlies-Lagen 21 führender Strompfad, dessen elektrischer Widerstand sehr empfindlich davon abhängt, ob von den Vlies-Lagen 21 Öl adsorbiert wurde oder nicht. Dabei nimmt der elektrische Widerstand des Strompfades mit zunehmender Menge des adsorbierten Öles zu.

Sobald dann ein Schwellwert des elektrischen Widerstandes überschritten wird, kann die Ablaßleitung 7 automatisch von der Ausgangsleitung 4 abgetrennt werden, um eine Ableitung übermäßig verschmutzten Wassers sicher zu vermeiden.

Grundsätzlich kann der Widerstand des Strompfades auch durch vorübergehendes Auftreten von Luft- bzw. Gasbläschen, insbesondere an den Elektroden 22, stark erhöht werden. Aus diesem Grunde kann vorgesehen sein, bei Überschreitung des Schwellwertes des elektrischen Widerstandes zunächst auf Umlaufbetrieb umzuschalten. Auf diese Weise kann ohne Gefahr einer Einleitung übermäßig verschmutzten Wassers in die Ablaßleitung 7 gegebenenfalls abgewartet werden, bis die Luft- bzw. Gasbläschen durch das weiterströmende Wasser abgebaut worden sind.

Sollte jedoch der elektrische Widerstand des Strompfades oberhalb des Schwellwertes bleiben, so muß die Anlage überprüft werden, wobei im Regelfall lediglich der Filtersatz 9 ausgewechselt werden muß.

Die Vlies-Lagen 21 mit den Elektroden 22 können als Teil des Filtersatzes 9 an der Ummantelung 10 angeordnet sein, so daß diese Überwachungselemente immer zwangsläufig zusammen mit dem Filtersatz 9 ausgetauscht werden. Die elektrischen Zuleitungen für die Elektroden 22 können in das Material der Ummantelung 10 eingebettet und mit einem Kabel verbunden sein, welches durch eine entsprechende Durchführung im oberen Deckel des Gehäuses 8 nach außen herausgeführt ist. Damit lassen sich die Elektroden 22 in besonders einfacher Weise an eine externe Überwachungseinheit anschließen, die die Elektroden 22 auch mit Strom versorgt.

Grundsätzlich können auch andere Methoden zur Überwachung der Restverschmutzung eingesetzt werden.

Beispielsweise ist es möglich, oberhalb und unterhalb der Vlies-Lagen 21 Drucksensoren anzuordnen, um die Differenz der Drucke oberhalb und unterhalb der Vlies-Lagen 21 zu bestimmen. Da die Drosselwirkung der Vlies-Lagen 21 mit der Menge des von diesen Lagen 21 adsorbierten Öles deutlich zunimmt, ist auch die Druckdifferenz ein empfindliches Maß für die Restverschmutzung.

Bei Verschmutzungen, die wie Öl eine geringere Dichte als das Wasser aufweisen und deshalb nach oben gedrängt werden, ist es vorteilhaft, wenn das verschmutzte Wasser dem Filtersatz 9 von oben zugeführt wird bzw. den Filtersatz 9 nach unten durchströmt. Auf diese Weise kann die Ölverschmutzung sowohl durch das Filtermaterial als auch durch Auftriebskräfte zurückgehalten werden.

Die Anordnung von Membranpumpen 2 ist vorteilhaft, weil die Ölverschmutzungen in derartigen Pumpen - anders als in üblichen Kreisel- oder Kolbenpumpen - mit dem Wasser keine Emulsionen bilden, aus denen sich das Öl nur deutlich schwerer als aus Öl-Wasser-Gemengen entfernen läßt.

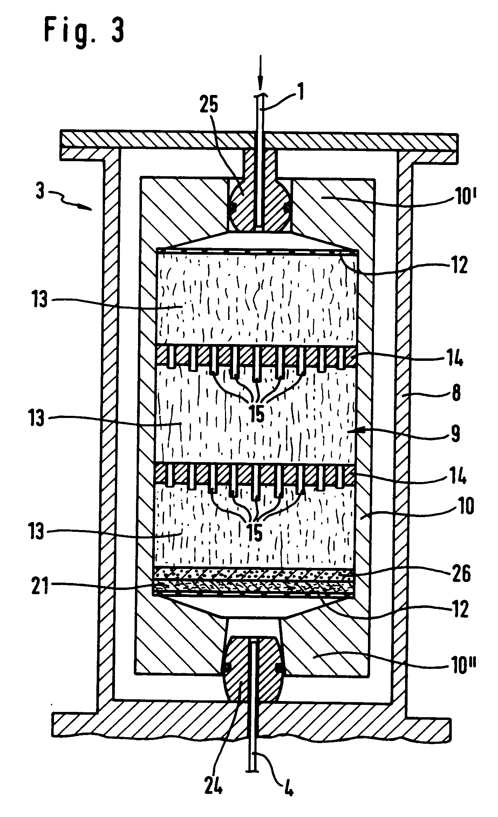

Die Fig. 3 zeigt einen gegenüber Fig. 1 abgewandelten Aufbau des Filtersatzes 9.

Hierbei ist die Ummantelung 10 nach Art einer Kartusche mit oberen und unteren Böden 10' und 10'' ausgebildet, in denen jeweils Mittelöffnungen angeordnet sind. Diese Mittelöffnungen besitzen aufgrund der relativ großen Dicke der Böden 10' und 10'' eine gewisse axiale Länge, welche gegebenenfalls auch durch die Anordnung rohrartiger Stutzen erreicht werden kann. Die untere Mittelöffnung kann sich konisch nach unten etwas erweitern. In entsprechender Weise kann sich die obere Mittelöffnung konisch nach oben etwas erweitern. Jedoch ist es grundsätzlich auch möglich, die genannten Öffnungen zylindrisch auszubilden. Nach Entfernung des oberen Deckels des Gehäuses 8 läßt sich die von der Ummantelung 10 gebildete Kartusche auf einen unteren Stutzen 24 aufsetzen, welcher am unteren Boden des Gehäuses 8 angeordnet ist und eine mit der Leitung 4 verbundene Mittelöffnung aufweist. Am oberen Deckel des Gehäuses 8 ist ein weiterer Stutzen 25 angeordnet, welcher sich in die Mittelöffnung des oberen Bodens 10' einschieben läßt. An beiden Stutzen 24 und 25 sind Dichtungen angeordnet, welche den Ringspalt zwischen den Innenwänden der Öffnungen in den Böden 10' und 10'' und dem Außenumfang der Stutzen 24 und 25 absperren. Auf diese Weise läßt sich der Filtersatz 9 innerhalb des Gehäuses 8 freitragend haltern, wie es in Fig. 3 dargestellt ist.

Somit werden einerseits die Dichtungen 11 in Fig. 1 zwischen der Ummantelung 10 des Filtersatzes 9 und dem Gehäuse 8 erübrigt. Außerdem wird der Austausch des Filtersatzes 9 erleichtert, weil zwischen Ummantelung 10 und Gehäuse 8 ein Abstandsraum verbleibt, so daß der Filtersatz 9 leichter ergreifbar ist.

Im übrigen besitzt der Filtersatz 9 in Fig. 3 einen leicht abgeänderten internen Aufbau. Hier ist unterhalb der untersten adsorbierenden Filterschicht 13 eine Aktivkohlematte 26 angeordnet. Darunter befindet sich eine einfache oder doppelte Vlieslage 21, in die gegebenenfalls Elektroden 22 (vgl. Fig. 2) eingebettet sein können, um durch Messung der Leitfähigkeit des Strompfades zwischen den Elektroden ein Signal über die Restverschmutzung zu erhalten. Diese Vlieslage 21 besteht in der Regel wiederum aus dem gleichen Material wie die Filterschichten 13, d.h. beispielsweise aus Polypropylen. Unter der Vlieslage 21 ist dann das untere Gitter 12 angeordnet, so daß sämtliche von der zu reinigenden Flüssigkeit durchsetzten Schichten des Filtersatzes 9 zwischen einem oberen und einem unteren Gitter 12 gehalten werden.

Oberhalb bzw. unterhalb der Gitter 12 verbleibt innerhalb der Ummantelung 10 ein gewisser trichterförmiger Freiraum, um die in den Filtersatz einlaufende bzw. die aus dem Filtersatz 9 auslaufende Flüssigkeit verteilen bzw. sammeln zu können.

Die Platten 14 zwischen den Filterschichten 13 können in gleicher Weise ausgebildet sein, wie es anhand der Fig. 1 erläutert wurde, d.h. diese Platten 14 können von Bohrungen bzw. Röhrchen 15 mit unterschiedlichen Querschnitten und/oder Längen durchsetzt werden.

Sowohl bei der Ausführungsform nach Fig. 1 als auch bei der Ausführungsform nach Fig. 3 kann die Ummantelung 10 des Filtersatzes 10 aus Polypropylen (in fester, homogener Form) bestehen. Dieses Material ist auch für die Platten 14 geeignet.

## Patentansprüche

1. Vorrichtung zur Filtration von verunreinigten Flüssigkeiten, insbesondere von Wasser, welches durch Öl bzw. ölhaltige Stoffe verschmutzt ist, mit
- einer von der Flüssigkeit durchsetzten Filterzone (9), in der die Verunreinigungen, z.B. durch Adsorption, zurückgehalten werden, sowie
- einer ausgangsseitig der Filterzone (9) angeordneten Überwachungseinrichtung (18,19;21,22), welche bei unzureichender Wirkung der Filterzone (9) eine die verschmutzte Flüssigkeit zur Eingangsseite der Filterzone (9) fördernde Pumpe (2) abschaltet und/oder eine an den Ausgang der Filterzone (9) anschließende Abfuhrleitung (7) absperrt,
dadurch gekennzeichnet,
- daß ein von der Überwachungseinrichtung (18,19;21,22) gesteuertes Umlaufventil (5) angeordnet ist, welches zwischen einer Durchlaßstellung, in der der Ausgang der Filterzone (9) mit der Abfuhrleitung (7) verbunden ist, und einer Umlaufstellung umschaltbar ist, in der der Ausgang der Filterzone (9) an die Saugseite der Pumpe (2) angeschlossen ist, deren Druckseite mit dem Eingang der Filterzone (9) verbunden ist, und
- daß das Umlaufventil (5) bei Betriebszuständen, bei denen die Überwachungseinrichtung (18,19;21,22) eine Überschreitung eines Schwellwertes für die Restverschmutzung der aus der Filterzone (9) auftretenden Flüssigkeit registriert, von der Überwachungseinrichtung auf Umlaufbetrieb und, wenn der Umlaufbetrieb zu einer Absenkung des Meßwertes für die Restverschmutzung unter den Schwellwert führt. erneut in die Durchlaßstellung Umschaltbar ist.

2. Vorrichtung nach Anspruch 1, dadurch gekennzeichnet, daß die Pumpe (2) bzw. der Zulauf weiterer verschmutzter Flüssigkeit zur Filterzone (9) abgeschaltet werden, wenn der Umlaufbetrieb nicht innerhalb vorgegebener Zeit zu einer Absenkung des Meßwertes unter dem Schwellwert führt.

3. Vorrichtung nach Anspruch 1 oder 2,
dadurch gekennzeichnet, daß zur Registrierung der Restverschmutzung ein Lichtemitter (18), dessen Lichtstrahl ausgangsseitig der Filterzone (9) einen Bereich der Flüssigkeit durchsetzt, sowie damit nach Art von Lichtschranken zusammenwirkende Lichtsensoren (19',19'') angeordnet sind, deren Ausgangssignale von den auf die Sensoren einfallenden Lichtintensitäten abhängig sind, wobei die Lichtsensoren (19',19'') relativ zur Achse des Lichtstrahles 2 so angeordnet sind, daß sich das Verhältnis der ausgangsseitigen Signalpegel mit der Anzahl der in der Flüssigkeit vorhandenen lichtstreuenden Partikel verändert.

4. Vorrichtung nach Anspruch 3, dadurch gekennzeichnet, daß eine Anzeige für die Partikelzahl vorhanden ist.

5. Vorrichtung nach einem der Ansprüche 1 bis 4,
dadurch gekennzeichnet,
daß ausgangsseitig der Filterzone (9) innerhalb der Flüssigkeit zwei Elektroden (22) angeordnet sind, zwischen denen - durch Anschluß der Elektroden (22) an entgegengesetzte Pole einer elektrischen Spannungsquelle - ein die Flüssigkeit durchsetzender bzw. über Elemente in der Flüssigkeit führender Strompfad erzeugbar ist, dessen Widerstand als Maß für die Restverschmutzung auswertbar ist.

6. Vorrichtung nach Anspruch 5, dadurch gekennzeichnet, daß am Ausgang der Filterzone (9) eine von der Flüssigkeit umspülte bzw. durchsetzte Folien-, Gewebe- oder Vliesbahn (21) als Träger für die Elektroden (22) angeordnet ist.

7. Vorrichtung nach einem der Ansprüche 5 oder 6, dadurch gekennzeichnet, daß die Folien-, Gewebe- oder Vliesbahn (21) quer zur Strömung der Flüssigkeit angeordnet ist.

8. Vorrichtung nach einem der Ansprüche 5 bis 7, dadurch gekennzeichnet, daß die Folien-, Gewebe- oder Vliesbahn (21) flüssigkeitsdurchlässig ausgebildet und den gesamten Querschnitt des auslaßseitigen Flüssigkeitsstromes überspannend angeordnet ist.

9. Vorrichtung nach einem der Ansprüche 5 bis 8, dadurch gekennzeichnet, daß die Folien-, Gewebe- oder Vliesbahn (21) aus gleichartigem Material - z.B. aus öladsorbierendem Material - wie die filterwirksamen Bereiche der Filterzone (9) besteht.

10. Vorrichtung nach einem der Ansprüche 1 bis 9, dadurch gekennzeichnet, daß die Filterzone (9) mehrere in Strömungsrichtung der Flüssigkeit hintereinander angeordnete, quer zur Strömungsrichtung erstreckte Filterschichten (13) besitzt, zwischen denen Platten (14) angeordnet sind, die eine Vielzahl von Bohrungen bzw. Röhrchen (15) zum gedrosselten Durchtritt der Flüssigkeit aufweisen.

11. Vorrichtung nach Anspruch 10, dadurch gekennzeichnet, daß der Drosselwiderstand der Bohrungen bzw. Röhrchen (15) nahe der Plattenränder geringer als der Drosselwiderstand der übrigen Bohrungen bzw. Röhrchen (15) ist.

12. Vorrichtung nach einem der Ansprüche 10 oder 11, dadurch gekennzeichnet, daß die Röhrchen (15) auf der in Durchlaßrichtung der Platten (14) weisenden Seite in die jeweils anschließende Filterschicht (13) eindringen.

## Claims

1. Apparatus for the filtration of contaminated liquids, in particular of water, which is contaminated by oil or oil containing substances comprising
- a filter zone (9) permeated by the liquid in which the contaminations are retained, for example by adsorption, and also
- a monitoring device (18, 19; 21, 22) arranged at the output side of the filter zone (9) which, on inadequate action of the filter zone (9), switches off a pump (2) which conveys the contaminated liquid to the input side of the filter zone (9) and/or blocks off a discharge line (7) connected to the output of the filter zone (9),
characterised
- in that a recirculating valve (5) controlled by the monitoring device (18, 19; 21, 22) is provided which can be switched over between a throughflow position in which the output of the filter zone (9) is connected to the discharge line (7) and a recirculation position in which the output of the filter zone (9) is connected to the suction side of the pump (2) the pressure side of which is connected with the input of the filter zone (9), and
- in that the recirculation valve (5) can be switched over by the monitoring means to recirculatory operation with operating conditions in which the monitoring device (18, 19; 21, 22) registers a transgression of a threshold value for the residual contamination of the liquid emerging from the filter zone (9) and can again be switched into the throughflow position when the recirculatory operation leads to a lowering of the measured value for the residual contamination below the threshold value.

2. Apparatus in accordance with claim 1, characterised in that the pump (2) or the supply of further contaminated liquid to the filter zone (9) is switched off when the recirculatory operation does not lead within a predetermined time to a lowering of the measured value below the threshold value.

3. Apparatus in accordance with claim 1 or claim 2, characterised in that for the registration of the residual contamination a light emitter (18) is provided, the light beam of which passes at the output side of the filter zone (9) through a region of the liquid, as well as light sensors (19', 19'') which cooperate therewith in the manner of light barriers, with the output signals of the light sensors being dependent on the light intensities incident on the sensors, with the light sensors (19', 19'') being so arranged relative to the axis of the light beam (2) that the ratio of the output side signal levels changes with the number of the light scattering particles present in the liquid.

4. Apparatus in accordance with claim 3, characterised in that a display is present for the number of particles.

5. Apparatus in accordance with one of the claims 1 to 4, characterised in that two electrodes (22) are arranged inside the liquid at the output side of the filter zone (9) between which - on connecting the electrodes (22) to opposite poles of an electrical voltage source - a current path can be generated which passes through the liquid or over elements in the liquid and the resistance of which can be evaluated as a measure for the residual contamination.

6. Apparatus in accordance with claim 5, characterised in that at the output of the filter zone (9) a foil web, fabric web or fleece web (21) around which the liquid flows or which is permeated by the liquid is provided as a carrier for the electrodes.

7. Apparatus in accordance with one of the claims 5 or 6, characterised in that the foil web, fabric web or fleece web (21) is arranged transversely to the flow of the liquid.

8. Apparatus in accordance with one of the claims 5 to 7, characterised in that the foil web, fabric web or fleece web (21) is formed to be permeable to liquid and is arranged so that it spans the entire cross-section of the outlet side liquid flow.

9. Apparatus in accordance with one of the claims 5 to 8, characterised in that the foil web, fabric web or fleece web (21) consists of the same type of material - for example of oil absorbing material - as the active filter regions of the filter zone (9).

10. Apparatus in accordance with one of the claims 1 to 9, characterised in that the filter zone 9 has several filter layers (13) arranged in series in the flow direction of the liquid and extending transverse to the flow direction between which plates (14) are arranged which have a plurality of bores or tubules (15) for the restricted passage of the liquid.

11. Apparatus in accordance with claim 10, characterised in that the throttle resistance of the bores or tubules (15) close to the margins of the plate is smaller than the throttle resistance of the remaining bores or tubules (15).

12. Apparatus in accordance with one of the claims 10 or 11, characterised in that the tubules (15) penetrate at the side pointing in the throughflow direction of the plates (14) into the respectively following filter layer (13).

## Revendications

1. Dispositif pour la filtration de liquides pollués, notamment d'eau, qui est encrassée par de l'huile ou des matières contenant de l'huile, comportant :
- une zone de filtrage (9) traversée par le liquide et dans laquelle les impuretés sont retenues, par exemple par adsorption, et également
- un dispositif de contrôle (18, 19 21, 22) disposé du côté de sortie de la zone de filtrage (9) et qui, en cas d'action insuffisante de la zone de filtrage (9), désactive une pompe (2) propulsant le liquide encrassé vers le côté d'entrée de la zone de filtrage (9) et/ou ferme un conduit de décharge (7) relié à la sortie de la zone de filtrage (9),
- caractérisé en ce que :
- il est prévu une soupape inverseuse (5), commandée par le dispositif de contrôle (18, 19 ; 21, 22) et qui peut être commutée entre une position de passage, dans laquelle la sortie de la zone de filtrage (9) est reliée au conduit de décharge (7), et une position d'inversion dans laquelle la sortie de la zone de filtrage (9) est reliée au côté d'aspiration de la pompe (2), dont le côté de refoulement est relié à l'entrée de la zone de filtrage (9), et en ce que
- la soupape inverseuse (5) peut à nouveau être soumise, dans des états de marche dans lesquels le dispositif de contrôle (18, 19 ; 21, 22) enregistre un dépassement d'une valeur de seuil concernant l'encrassement résiduel du liquide sortant de la zone de filtrage (9), à une commutation dans un mode d'inversion par le dispositif de contrôle et, lorsque le mode d'inversion conduit à une diminution de la valeur de mesure de l'encrassement résiduel en dessous de la valeur de seuil, elle peut être à nouveau commutée dans la position de passage.

2. Dispositif selon la revendication 1, caractérisé en ce que la pompe (2) ou bien l'admission d'un autre liquide encrassé dans la zone de filtrage (9) seront arrêtées quand le mode d'inversion ne conduit pas, au bout d'un temps prédéterminé, à une diminution de la valeur de mesure en dessous de la valeur de seuil.

3. Dispositif selon la revendication 1 ou 2, caractérisé en ce que, pour l'enregistrement de l'encrassement résiduel, il est prévu un émetteur de lumière (18), dont le rayon lumineux traverse du côté de sortie de la zone de filtrage (9) une partie du liquide, et également des capteurs de lumière (19', 19'') coopérant à la façon de cellules photo-électriques et dont les signaux de sortie sont fonction des intensités de lumière arrivant sur les capteurs, lesdits capteurs de lumière (19', 19'') étant disposés par rapport à l'axe du rayon lumineux de telle sorte que le rapport entre les niveaux de signaux à la sortie varie en fonction du nombre de particules de dispersion de lumière se trouvant dans le liquide.

4. Dispositif selon la revendication 3, caractérisé en ce qu'il est prévu un indicateur du nombre de particules.

5. Dispositif selon une des revendications 1 à 4, caractérisé en ce qu'il est prévu du côté de sortie de la zone de filtrage (9), à l'intérieur du liquide, deux électrodes (22) entre lesquelles peut être établie - par raccordement des électrodes (22) à des pôles opposés d'une source de tension électrique - une voie de passage de courant traversant le liquide ou bien conduisant dans le liquide par l'intermédiaire d'éléments, et dont la résistance peut être évaluée comme une mesure de l'encrassement résiduel.

6. Dispositif selon la revendication 5, caractérisé en ce qu'il est prévu à la sortie de la zone de filtrage (9), comme support pour les électrodes (22), une nappe (21) sous forme de feuille, de tissu ou d'intissé, balayée ou traversée par le liquide.

7. Dispositif selon une des revendications 5 ou 6, caractérisé en ce que la nappe (21) sous forme de feuille, de tissu ou d'intissé est disposée perpendiculairement à l'écoulement de liquide.

8. Dispositif selon une des revendications 5 à 7, caractérisé en ce que la nappe (21) sous forme de feuille, de tissu ou d'intissé est agencée de façon à être perméable au liquide et elle est disposée de manière à couvrir toute la section de passage du courant de liquide du côté de sortie.

9. Dispositif selon une des revendications 5 à 8, caractérisé en ce que la nappe (21) sous forme de feuille, de tissu ou d'intissé est constituée d'un matériau de même nature - par exemple d'un matériau adsorbant l'huile - que les zones efficaces de filtrage de la zone de filtrage (9).

10. Dispositif selon une des revendications 1 à 9, caractérisé en ce que la zone de filtrage (9) comporte plusieurs couches de filtrage (13), disposées l'une après l'autre dans la direction d'écoulement du liquide, s'étendant perpendiculairement à la direction d'écoulement et entre lesquelles sont disposées des plaques (14) qui comportent un grand nombre de trous ou de petits tubes (15) pour assurer un passage étranglé du liquide.

11. Dispositif selon la revendication 10, caractérisé en ce que la résistance par étranglement produite par les trous ou les petits tubes (15) à proximité des bords des plaques est plus petite que la résistance par étranglement produite par les autres trous ou petits tubes (15).

12. Dispositif selon une des revendications 10 ou 11, caractérisé en ce que les petits tubes (15) pénètrent, sur le côté orienté dans la direction de passage à travers les plaques (14), dans la couche de filtrage (13) située respectivement à la suite.
